# EUROPÄISCHE PATENTSCHRIFT

(11) **EP 3 456 992 B1**
(45) Veröffentlichungstag und Bekanntmachung des Hinweises auf die Patenterteilung: **03.06.2020**
(21) Anmeldenummer: 18194387.9
(22) Anmeldetag: 14.09.2018
(51) Int. Cl.: F16C 41/00, F16C 17/02, F16C 33/04, B01F 13/08

(54) **RÜHRKOPF MIT IDENTIFIKATIONSVORRICHTUNG**
MIXING HEAD WITH IDENTIFICATION DEVICE
TÊTE MÉLANGEUSE POURVUE DE DISPOSITIF D'IDENTIFICATION

(30) Priorität: 18.09.2017 AT 507862017
(43) Veröffentlichungstag der Anmeldung: 20.03.2019
(73) Patentinhaber: Zeta Biopharma GmbH, 8501 Lieboch (AT)
(72) Erfinder: Pöschl, Georg, 8041 Graz (AT)
(74) Vertreter: Röggla, Harald

(56) Entgegenhaltungen:
- EP-A1- 2 548 485
- EP-A1- 3 009 700
- EP-A2- 1 748 201
- DE-U1-202016 102 133
- GB-A- 1 444 905

## Beschreibung

Die Erfindung betrifft einen Rührkopf mit einer Lagernabe, einer Lagerbuchse, zumindest einem Rührflügel und einem Kupplungsabschnitt, wobei die Lagernabe eine Außenfläche und eine Innenfläche aufweist, und die Lagerbuchse in die Lagernabe, anliegend an die Innenfläche, formschlüssig eingepasst ist, wobei der Rührflügel mit dem Kupplungsabschnitt und der Außenfläche der Lagernabe verbunden ist.

Des Weiteren betrifft die Erfindung ein Verfahren zum Versehen eines Rührkopfes mit einer Identifikationsvorrichtung.

In den Bereichen der biopharmazeutischen Industrie, der Lebensmittelindustrie und auf dem Gebiet der aseptischen flüssigen Produktionsprozesse werden Rührköpfe als Teil von Rührwerken in Rührbehältern eingesetzt. Die Rührbehälter sind in der Regel als gasdichte und verschließbare, kesselförmige Behälter aus Metall oder Glas ausgeführt, welche eine einfache Reinigung und Sterilisation und somit eine mehrfache Verwendung gewährleisten. Die Durchmischung eines im Rührbehälter aufgenommenen Rührmediums erfolgt innerhalb des Rührbehälters mittels des Rührkopfes des Rührwerkes, welcher je nach Anwendungsfall einen oder mehrere Rührflügel aufweisen kann. Des Weiteren kann der Rührkopf mit einer Rührwelle mit an dieser angeordneten Rührwellenflügeln verbunden sein, um Rührmedien in Behältern mit einem größeren Volumen homogen zu durchmischen. Die Lagerung des Rührkopfes derartiger Rührwerke erfolgt über ein Rotationslager, wie beispielsweise ein Gleitlager, welches eine Lagernabe mit einer darin angeordneten Lagerbuchse aufweist. In den zuvor genannten Anwendungsbereichen werden hohe Standards in Bezug auf die Keimfreiheit der Produkte angelegt, wodurch die Produktion, Lagerung und der Transport von diesen unter sterilen Bedingungen zu erfolgen hat. Im biopharmazeutischen Anlagenbau sind aseptisch designte Rührwerke der aktuelle Stand der Technik. Hier herrschen spezielle Anforderungen an Material und Oberflächengüte der Rührkopfe und weiterer Bestandteile des Rührwerks. Es werden somit beispielsweise austenitische Stähle mit niedrigem Ferritgehalt verwendet, welche durch Elektropolitur eine abschließende Oberflächenveredelung erhalten. Hierbei werden Spitzen und Tiefen der Oberfläche von Bauteilen geglättet wodurch die Keimanhaftunsmöglichkeit und somit das Risiko von Kreuzkontaminationen sinkt.

EP 1 748 201 B1 offenbart einen Rührkopf, welcher eine Magnetkupplung zwischen Antriebseinheit und Rührwerk aufweist. Dieser umfasst des Weiteren ein Rotationslager in Form eines Gleitlagers mit einer Lagernabe und einer darin aufgenommenen Lagerbuchse.

Ein Nachteil von Rührköpfen des Standes der Technik ist, dass durch die Oberflächenbehandlung beispielweise mittels Elektropolitur, die Rührköpfe keine eindeutigen Identifizierungsmerkmale aufweisen. Ein Markieren von Rührköpfen mittels Ätzungen, Stanzmarkierungen oder sonstigen oberflächenverändernden Methoden wird oftmals von Anlagenbetreibern aus Hygienegründen abgelehnt. Besonders nachteilig ist, dass im Zuge von Demontage- und Wartungsarbeiten von biopharmazeutischen Anlagen oder Anlagen in der Lebensmittelindustrie hierdurch keine Zuordnung von einzelnen Rührköpfen zu weiteren Bauteilen eines Rührwerkes im demontierten Zustand getroffen werden kann. Dies führt dazu, dass die Verwechslungsgefahr von Rührköpfen steigt, und möglicherweise Rührköpfe vertauscht werden. Es ist jedoch aus betrieblichen Gründen vorteilhaft Bauteile von Rührwerken bei Revisionsarbeiten nicht untereinander zu tauschen. Beispielsweise ist der Verschleißzustand der Lagerbuchsen aus den Betriebsstunden eines Rührwerkes ableitbar. Des Weiteren führt eine Verwechslung und somit ein unbeabsichtigtes Vertauschen von miteinander eingelaufenen Lagerkomponenten zu einem wesentlich erhöhten Verschleiß, und schlimmstenfalls zu einer Kontamination des Rührmediums.

Es ist die Aufgabe der vorliegenden Erfindung einen Rührkopf und ein Verfahren zu schaffen, welche die oben angeführten Nachteile vermeiden.

Erfindungsgemäß wird die vorliegende Aufgabe dadurch gelöst, dass der Rührkopf eine Identifikationsvorrichtung aufweist und die Lagernabe eine Durchgangsöffnung zwischen der Außenfläche und der Innenfläche aufweist, die Identifikationsvorrichtung in der Durchgangsöffnung positioniert ist, und der Rührflügel die Durchgangsöffnung an der Außenfläche verschließt.

Die vorliegende Aufgabe wird außerdem durch ein Verfahren zum Versehen eines Rührkopfes mit einer Identifikationsvorrichtung mit folgenden Verfahrensschritten gelöst:
a) Erzeugen einer Durchgangsöffnung von einer Außenfläche zu einer Innenfläche einer Lagernabe des Rührkopfes;
b) Verbinden eines Rührflügels mit der Außenfläche an einer die Durchgangsöffnung überdeckenden Position und Verschließen der Durchgangsöffnung an der Außenfläche;
c) Einbringen der Identifikationsvorrichtung in die Durchgangsöffnung;
d) Erhitzen des Rührkopfes;
e) Einpassen einer Lagerbuchse an der Innenfläche an einer die Durchgangsöffnung überdeckenden Position und Verschließen der Durchgangsöffnung an der Innenfläche.

Die erfindungsgemäße Ausführung des Rührkopfes sieht eine Identifikationsvorrichtung vor, welche in einer Durchgangsöffnung positioniert ist, welche zwischen einer Außenfläche und einer Innenfläche einer Lagernabe des Rührkopfes ausgeführt ist. In die Innenfläche der Lagernabe ist eine Lagerbuchse eingepasst. An der Außenseite der Lagernabe ist ein Rührflügel derart mit der Lagernabe verbunden, dass die Durchgangsöffnung an der Außenseite verschlossen ist. Hierdurch wird der Vorteil erreicht, dass von der Außenfläche der Lagernabe keine Flüssigkeit wie beispielsweise Rührmedium in die Durchgangsöffnung eindringen und die Funktion der Identifikationsvorrichtung beeinträchtigen kann. Die erfindungsgemäße Ausführung des Rührkopfes bietet den Vorteil, dass durch die in der Durchgangsöffnung positionierte Identifikationsvorrichtung die Möglichkeit bereitgestellt wird, den Rührkopf auch ohne Veränderung seiner Oberfläche eindeutig zu identifizieren. Besonders vorteilhat ist, dass durch die Ausführung der Identifikationsvorrichtung als RFID-Chip auch eine vollautomatische Identifizierung bei einer automatisierten Demontage des Rührkopfes durchgeführt werden kann.

Vorteilhafte Ausgestaltungen des erfindungsgemäßen Rührkopfes und des Verfahrens, sowie alternativer Ausführungsvarianten werden in weiterer Folge anhand der Figuren näher erläutert.

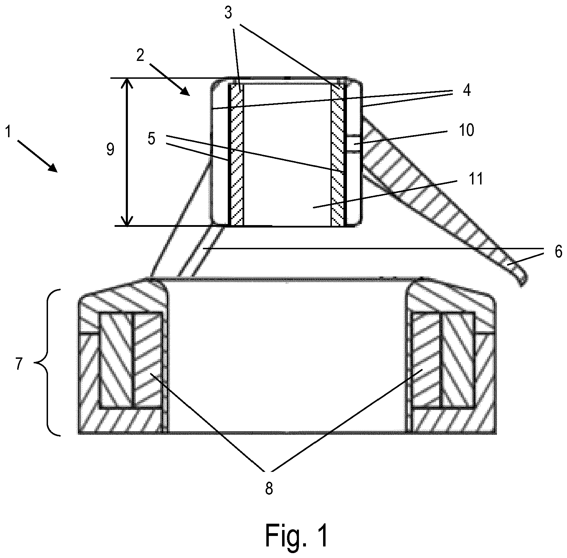

Figur 1 zeigt einen Schnitt durch einen erfindungsgemäßen Rührkopf in Seitansicht.

Figur 1 zeigt einen erfindungsgemäßen Rührkopf 1 in einer Schnittdarstellung von der Seite mit einer Lagernabe 2 und einer in der Lagernabe 2 aufgenommenen Lagerbuchse 3. Die Lagernabe 2 weist eine Außenfläche 4 und eine Innenfläche 5 auf, und die Lagerbuchse 3 ist in die Lagernabe 2 formschlüssig eingepasst, wobei die Lagebuchse 3 an die Innenfläche 5 der Lagernabe 2 anliegt. Der in Figur 1 in einer bevorzugten Ausführungsvariante dargestellte Rührkopf 1 weist drei Rührflügel 6 auf, wobei in der Schnittdarstellung von Figur 1 zwei Rührflügel 6 davon sichtbar sind. Im Allgemeinen weisen Ausführungsvarianten des erfindungsgemäßen Rührkopfes 1 zumindest einen Rührflügel 6 auf. Der Rührkopf 1 weist außerdem einen Kupplungsabschnitt 7 auf, wobei die Rührflügel 6 mit der Außenfläche 4 der Lagernabe 2 und dem Kupplungsabschnitt 7 verbunden sind. Der Kupplungsabschnitt 7 beinhaltet in einer bevorzugten Ausführungsvariante des Rührkopfes 1 Kupplungsmagnete 8. Diese werden im Betrieb des Rührkopfes 1 mit Kupplungsmagneten eines Antriebs eines Rührwerks magnetisch gekoppelt und bilden somit eine Antriebskupplung, welche ein Drehmoment des Antriebs auf den Rührkopf 1 überträgt, und diesen in Rotation versetzt. In der in Figur 1 dargestellten bevorzugten Ausführungsvariante sind die Rührflügel 6 im Wesentlichen entlang einer Höhe 9 der Lagernabe 2 mit deren Außenfläche 4 verbunden. In alternativen Ausführungsvarianten können die Rührflügel 6 auch an einem oberen oder unteren Abschnitt der Außenfläche 4, welcher normal auf die Höhe 9 der Lagernabe 2 steht, beispielsweise punktförmig mit der Außenfläche 4 verbunden sein. Die Außenfläche 4 umfasst somit die gesamte Höhe 9 der Lagernabe 2, als auch jeweils einen dazu im Wesentlichen normalen Abschnitt an dem oberen und dem unteren Ende der Lagernabe 2. Die Lagernabe 2 des Rührkopfes 1 weist des Weiteren eine Durchgangsöffnung 10 zwischen der Außenfläche 4 und der Innenfläche 5 auf, in welcher eine, in Figur 1 nicht dargestellte, Identifikationsvorrichtung des Rührkopfes 1 positioniert ist. Einer der Rührflügel 6 verschließt die Durchgangsöffnung 10 an der Außenfläche 4 der Lagernabe 2. Hierdurch wird der Vorteil erreicht, dass die Identifikationsvorrichtung an der Außenfläche 4 flüssigkeitsdicht und vor mechanischen Einflüssen geschützt von der Lagernabe 2 aufgenommen wird. Besonders vorteilhaft ist, dass hierdurch die Oberflächenbeschaffenheit des Rührkopfes 1 durch die Aufnahme der Identifikationsvorrichtung nicht negativ beeinflusst wird, und eine homogen glatte Oberfläche des Rührkopfes 1 beibehalten werden kann.

Die Identifikationsvorrichtung ist in einer bevorzugten Ausführungsvariante ein mit Kunststoff ummantelter RFID-Chip. Hierdurch wird der Vorteil erreicht, dass die Identifikationsvorrichtung berührungslos auslesbar ist. Der Kunststoff stellt eine Schutzhülle für den RFID-Chip bereit, und verschließt zusätzlich die Durchgangsöffnung 10, wodurch der RFID-Chip nicht mit einem Rührmedium in Kontakt kommt, welches vom Rührkopf 1 durchmischt wird. Vorzugsweise ist der Kunststoff als FDA konformer Kunststoff ausgeführt, wodurch der Vorteil erreicht wird, dass der erfindungsgemäße Rührkopf 1 den Anforderungen der biopharmazeutischen Industrie genügt.

Gemäß einer weiter bevorzugten Ausführungsvariante verschließt die Lagerbuchse 3 die Durchgangsöffnung 10 an der Innenseite 5. Hierdurch wird der Vorteil erreicht, dass die Durchgangsöffnung 10 sowohl an der Außenseite 4 durch den Rührflügel 6, als auch an der Innenseite 5 durch die Lagerbuchse 3 verschlossen ist. Besonders vorteilhaft ist, dass hierdurch ein zusätzlicher Schutz für die Identifikationsvorrichtung bereitgestellt wird, und keine Flüssigkeit wie beispielsweise Rührmedium in die Durchgangsöffnung 10 eindringen kann.

Vorzugsweise ist die Lagerbuchse 3 als keramische Gleitlagerbuchse ausgeführt. Die Lagernabe 2 und die weiteren Komponenten des Rührkopfes 1 sind in der Regel aus metallischen Werkstoffen hergestellt, wodurch diese die Identifikationsvorrichtung elektromagnetisch abschirmen. Durch die Ausführung der Lagerbuchse 3 als keramische Gleitlagerbuchse wird der Vorteil erreicht, dass die Identifikationsvorrichtung aus einer Position innerhalb eines Hohlraumes 11 der durch die Lagernabe 2, bzw. die Lagerbuchse 3 definiert wird, elektromagnetisch berührungslos auslesbar ist. Hierzu wird in einem von einem Rührwerk demontierten Zustand des Rührkopfes 1 eine Auslesevorrichtung, beispielsweise eine Antenne, in diesen Hohlraum 11 eingebracht.

Der in Figur 1 dargestellte Rührkopf 1 stellt einen Bestandteil eines Rührwerks dar, welches in einem Rührbehälter zur Durchmischung von dem darin aufgenommenem Rührmedium eingesetzt wird. Ein Rührwerk umfasst einen Antrieb mit einem Antriebskupplungsabschnitt, welcher mit dem Kupplungsabschnitt 7 des Rührkopfes 1 eine trennbare Antriebskupplung bildet. Das Rührwerk weist des Weiteren ein Gegenlager auf, auf welchem die Lagerbuchse 3 drehbar gelagert ist. In einer bevorzugten Ausführungsvariante des Rührwerks weist das Gegenlager die Auslesevorrichtung, beispielsweise in Form einer Antenne, auf. Die Identifikationsvorrichtung ist somit jederzeit durch die Auslesevorrichtung im Gegenlager kontaktlos auslesbar. Hierdurch wird der Vorteil erreicht, dass der Rührkopf 1 zum Auslesen der Identifikationsvorrichtung nicht wie zuvor beschrieben, von dem Rührwerk entfernt werden muss. Besonders vorteilhaft ist hierbei, dass das Auslesen der Identifikationsvorrichtung somit jederzeit, auch während des Betriebs des Rührwerks beziehungsweise des Rührkopfes 1, ermöglicht wird.

Besonders bevorzugt weist das Gegenlager eine keramische Gleitlagerbuchse auf. Hierdurch wird der Vorteil erreicht, dass das Gegenlager besonders verschleißresistent ist und die Anordnung der Auslesevorrichtung und das Auslesen der Identifikationsvorrichtung erleichtert wird. Insbesondere wenn die Lagerbuchse 3 des Rührkopfes 1 ebenfalls als keramische Gleitlagerbuchse ausgeführt ist ergibt sich der Vorteil, dass ein besonders verschleißarmer Betrieb des Rührwerks ermöglicht wird.

Das erfindungsgemäße Verfahren zum Versehen eines Rührkopfes 1 mit einer Identifikationsvorrichtung weist folgende Verfahrensschritte auf: Zuerst wird ausgehend von der Außenfläche 4 der Lagernabe 2 zu der Innenfläche 5 die Durchgangsöffnung 10 erzeugt. Die Durchgangsöffnung 10 wird vorzugsweise ausgebohrt. Im Anschluss wird der Rührflügel 6 mit der Außenfläche 4 an einer die Durchgangsöffnung 10 überdeckenden Position verbunden, wobei die Durchgangsöffnung 10 an der Außenfläche 4 verschlossen wird. Durch diese Verfahrensabfolge wird der Vorteil erreicht, dass ein zur Innenfläche 5 geöffnetes Sackloch in der Lagernabe 2 bereitgestellt wird, ohne die Notwendigkeit dieses ausgehend von der Innenfläche 5 zu erzeugen. Die Verbindung zwischen dem Rührflügel 6 und der Außenfläche 4 wird beispielsweise durch Schweißen erzeugt. Das Erzeugen des Sackloches ausgehend von der Innenfläche 5 bringt das verfahrenstechnische Problem mit sich, dass innerhalb der Lagernabe 2 in der Regel zu wenig Platz zur Verfügung steht um geeignete Werkzeuge wie beispielsweise Bohrer einzubringen um ein Sackloch ausgehend von der Innenfläche 5 zu erzeugen. Durch das erfindungsgemäße Verfahren wird der Vorteil erreicht, dass diese Problematik umgangen wird. In weiterer Folge wird die Identifikationsvorrichtung in die Durchgangsöffnung 10 eingebracht. Hierdurch wird der Vorteil erreicht, dass die Identifikationsvorrichtung zwischen der Außenfläche 4 und der Innenfläche 5 der Lagernabe 2 in der Durchgangsöffnung 10 vor Umwelteinflüssen geschützt angeordnet wird. Wird die Identifikationsvorrichtung als kunststoffummantelter RFID-Chip bereitgestellt, ergibt sich zusätzlich der Vorteil, dass der Kunststoff die Durchgangsöffnung 10 von der Innenfläche 5 abdichtet. Im darauffolgenden Verfahrensschritt wird der Rührkopf 1 erhitzt. Die Erhitzung des Rührkopfes 1 bewirkt eine thermische Ausdehnung der Lagernabe 2, wodurch im abschließenden Verfahrensschritt die Lagerbuchse 3 an der Innenfläche der Lagernabe 2 an einer die Durchgangsöffnung 10 überdeckenden Position eingepasst werden kann. Hierbei wird die Durchgangsöffnung 10 an der Innenfläche 5 verschlossen. Hierdurch wird der Vorteil erreicht, dass die Lagerbuchse 3 die Identifikationsvorrichtung an der Innenseite 5 der Lagernabe 2 flüssigkeitsdicht verschließt und vor mechanischen Einflüssen schützt.
Es kann erwähnt werden, dass die Identifikationseinrichtung auch einen beschreibbaren Datenspeicher aufweisen kann, um in der Identifikationseinrichtung Daten zu speichern. Solche Daten könnten beispielsweise die Nutzungsdauer oder die Nutzungsfrequenz des Rührkopfes umfassen, welche von einem RFID-Reader des Rührwerks in der Identifikationseinrichtung gespeichert werden. Auch könnten beim Rühren auftretende technische Probleme, wie erhöhte Reibung oder ein Lagerschlagen, in dem Datenspeicher für Servicetechniker gespeichert werden.

In einer weiteren Ausführungsvariante könnte die Identifikationsvorrichtung auch ein mit Keramik ummantelter RFID-Chip sein. Hierdurch wird der Vorteil erreicht, dass die berührungslos auslesbare Identifikationsvorrichtung durch die harte und widerstandsfähige Keramik besonders gut mechanisch geschützt ist.

## Patentansprüche

1. Rührkopf (1) mit einer Lagernabe (2), einer Lagerbuchse (3), zumindest einem Rührflügel (6) und einem Kupplungsabschnitt (7), wobei die Lagernabe (2) eine Außenfläche (4) und eine Innenfläche (5) aufweist, und die Lagerbuchse (3) in die Lagernabe (2), anliegend an die Innenfläche (5), formschlüssig eingepasst ist,
wobei der Rührflügel (6) mit dem Kupplungsabschnitt (7) und der Außenfläche (4) der Lagernabe (2) verbunden ist,
**dadurch gekennzeichnet, dass**
der Rührkopf (1) eine Identifikationsvorrichtung aufweist und die Lagernabe (2) eine Durchgangsöffnung (10) zwischen der Außenfläche (4) und der Innenfläche (5) aufweist, die Identifikationsvorrichtung in der Durchgangsöffnung (10) positioniert ist, und der Rührflügel (6) die Durchgangsöffnung (10) an der Außenfläche (4) verschließt.

2. Rührkopf (1) gemäß Anspruch 1, **dadurch gekennzeichnet, dass** die Lagerbuchse (3) die Durchgangsöffnung (10) an der Innenseite (5) verschließt

3. Rührkopf (1) gemäß einem der Ansprüche 1 oder 2, **dadurch gekennzeichnet, dass** die Identifikationsvorrichtung ein mit Kunststoff ummantelter RFID-Chip ist.

4. Rührkopf (1) gemäß einem der Ansprüche 1 bis 3, **dadurch gekennzeichnet, dass** die Lagerbuchse (3) eine keramische Gleitlagerbuchse ist.

5. Rührwerk für einen Rührbehälter, mit einem Rührkopf (1) gemäß einem der vorhergehenden Ansprüche, **dadurch gekennzeichnet, dass** das Rührwerk einen Antrieb mit einem Antriebskupplungsabschnitt umfasst, wobei der Antriebskupplungsabschnitt und der Kupplungsabschnitt (7) des Rührkopfes (1) eine trennbare Antriebskupplung bilden, und das Rührwerk ein Gegenlager aufweist, wobei die Lagerbuchse (3) auf dem Gegenlager drehbar gelagert ist, und das Gegenlager eine Auslesevorrichtung aufweist, welche dazu ausgebildet ist die Identifikationsvorrichtung kontaktlos auszulesen.

6. Rührwerk gemäß Anspruch 5, **dadurch gekennzeichnet, dass** das Gegenlager eine keramische Gleitlagerbuchse aufweist.

7. Verfahren zum Versehen eines Rührkopfes (1) mit einer Identifikationsvorrichtung umfassend die Schritte:
f) Erzeugen einer Durchgangsöffnung (10) von einer Außenfläche (4) zu einer Innenfläche (5) einer Lagernabe (2) des Rührkopfes (1);
g) Verbinden eines Rührflügels (6) mit der Außenfläche (4) an einer die Durchgangsöffnung (10) überdeckenden Position und Verschließen der Durchgangsöffnung (10) an der Außenfläche (4);
h) Einbringen der Identifikationsvorrichtung in die Durchgangsöffnung (10);
i) Erhitzen des Rührkopfes (1);
j) Einpassen einer Lagerbuchse (3) an der Innenfläche (5) an einer die Durchgangsöffnung (10) überdeckenden Position und Verschließen der Durchgangsöffnung (10) an der Innenfläche (5).

## Claims

1. A stirrer head (1) having a bearing boss (2), a bearing bushing (3), at least one stirrer vane (6) and a coupling section (7), wherein the bearing boss (2) has an external surface (4) and an internal surface (5) and the bearing bushing (3) is form-fit into the bearing boss (2), resting on the internal surface (5), wherein the stirrer vane (6) is connected to the coupling section (7) and the external surface (4) of the bearing boss (2),
**characterized in that**
the stirrer head (1) has an identification device and the bearing boss (2) has a through-opening (10) between the external surface (4) and the internal surface (5), the identification device is positioned in the through-opening (10) and the stirrer vane (6) closes the through-opening (10) at the external surface (4).

2. A stirrer head (1) according to claim 1, **characterized in that** the bearing bushing (3) closes the through-opening (10) at the internal side (5).

3. A stirrer head (1) according to any of claims 1 or 2, **characterized in that** the identification device is a plastic-sheathed RFID chip.

4. A stirrer head (1) according to any of claims 1 to 3, **characterized in that** the bearing bushing (3) is a ceramic slide bearing bushing.

5. A stirring unit for a stirrer vessel, having a stirrer head (1) according to any of the preceding claims, **characterized in that** the stirring unit comprises a drive having a drive coupling section, wherein the drive coupling section and the coupling section (7) of the stirrer head (1) form a releasable drive coupling, and the stirring unit has a counter-bearing, wherein the bearing bushing (3) is rotatably mounted on the counter-bearing, and the counter-bearing has a reader, which is configured to read the identification device in a contactless way.

6. A stirring unit according to claim 5, **characterized in that** the counter-bearing has a ceramic slide bearing bushing.

7. A method for providing a stirrer head (1) with an identification device, comprising the steps of:
f) Forming a through-opening (10) from an external surface (4) towards an internal surface (5) of a bearing boss (2) of the stirrer head (1);
g) Connecting a stirrer vane (6) to the external surface (4) in a position covering the through-opening (10) and closing the through-opening (10) at the external surface (4);
h) Inserting the identification device in the through-opening (10);
i) Heating the stirrer head (1);
j) Fitting a bearing bushing (3) at the internal surface (5) in a position covering the through-opening (10) and closing the through-opening (10) at the internal surface (5).

## Revendications

1. Tête mélangeuse (1) comprenant un moyeu de support (2), un coussinet de palier (3), au moins une ailette mélangeuse (6) et une partie de couplage (7), dans laquelle le moyeu de support (2) présente une face extérieure (4) et une face intérieure (5), et le coussinet de palier (3) est ajusté par emboîtement dans le moyeu de support (2), en étant appliqué sur la face intérieure (5), dans laquelle l'ailette mélangeuse (6) est reliée à la partie de couplage (7) et à la face extérieure (4) du moyeu de support (2), **caractérisée en ce que** la tête mélangeuse (1) présente un dispositif d'identification et le moyeu de support (2) comporte une ouverture de passage (10) entre la face extérieure (4) et la face intérieure (5), le dispositif d'identification est positionné dans l'ouverture de passage (10), et l'ailette mélangeuse (6) ferme l'ouverture de passage (10) sur la face extérieure (4).

2. Tête mélangeuse (1) selon la revendication 1, **caractérisée en ce que** le coussinet de palier (3) ferme l'ouverture de passage (10) sur le côté intérieur (5).

3. Tête mélangeuse (1) selon une des revendications 1 ou 2, **caractérisée en ce que** le dispositif d'identification est une puce RFID enrobée d'une matière plastique.

4. Tête mélangeuse (1) selon l'une quelconque des revendications 1 à 3, **caractérisée en ce que** le coussinet de palier (3) est un coussinet de palier lisse céramique.

5. Système d'agitation pour un réservoir d'agitation, comprenant une tête mélangeuse (1) selon l'une quelconque des revendications précédentes, **caractérisé en ce que** le système d'agitation comprend un entraînement pourvu d'une partie de couplage d'entraînement, dans lequel la partie de couplage de l'entraînement et la partie de couplage (7) de la tête mélangeuse (1) forment un couplage d'entraînement séparable, et le système d'agitation présente un palier opposé, dans lequel le coussinet de palier (3) est monté de façon rotative sur le palier opposé, et le palier opposé présente un dispositif de lecture, qui est configuré de façon à lire sans contact le dispositif d'identification.

6. Système d'agitation selon la revendication 5, **caractérisé en ce que** le palier opposé présente un coussinet de palier lisse céramique.

7. Procédé pour équiper une tête mélangeuse (1) d'un dispositif d'identification, comprenant les étapes suivantes :
f) réaliser une ouverture de passage (10) d'une face extérieure (4) à une face intérieure (5) d'un moyeu de support (2) de la tête mélangeuse (1) ;
g) relier une ailette mélangeuse (6) à la face extérieure (4) au niveau d'une position qui recouvre l'ouverture de passage (10) et fermer l'ouverture de passage (10) sur la face extérieure (4) ;
h) introduire le dispositif d'identification dans l'ouverture de passage (10) ;
i) chauffer la tête mélangeuse (1) ; et
j) ajuster un coussinet de palier (3) sur la face intérieure (5) au niveau d'une position qui recouvre l'ouverture de passage (10) et fermer l'ouverture de passage (10) au niveau de la face intérieure (5).
